(19) Europäisches Patentamt
European Patent Office
Office européen des brevets

(11) EP 0 481 849 B1

(12) # FASCICULE DE BREVET EUROPEEN

(45) Date de publication et mention de la délivrance du brevet:
**03.01.1996 Bulletin 1996/01**

(51) Int Cl.$^6$: **C08F 214/18**, C08F 216/14, C08F 2/06, C09D 127/12

(21) Numéro de dépôt: **91402700.8**

(22) Date de dépôt: **09.10.1991**

(54) **Copolymère durcissable fluoré, son procédé de fabrication et son application dans les vernis et peintures**

Härtbares, fluoriertes Copolymer, Verfahren zu seiner Herstellung und seine Verwendung in Lacken und Farben

Curable fluorinated copolymer, process for its preparation and its use in varnishes and paints

(84) Etats contractants désignés:
**AT BE CH DE DK ES FR GB GR IT LI LU NL SE**

(30) Priorité: **19.10.1990 FR 9012970**

(43) Date de publication de la demande:
**22.04.1992 Bulletin 1992/17**

(73) Titulaire: **ELF ATOCHEM S.A.**
**F-92800 Puteaux (FR)**

(72) Inventeurs:
- **Kappler, Patrick**
  **F-69130 Ecully (FR)**
- **Perillon, Jean-Luc**
  **F-27300 Bernay (FR)**

(74) Mandataire: **Foiret, Claude**
**F-92091 Paris-La-Défense (FR)**

(56) Documents cités:
**EP-A- 0 391 232** **GB-A- 2 163 756**

EP 0 481 849 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

## Description

La présente invention concerne un copolymère fluoré durcissable de tétrafluoroéthylène ($C_2F_4$), d'au moins un autre monomère fluoré choisi parmi le chlorotrifluoroéthylène ($C_2F_3Cl$) et le fluorure de vinylidène ($C_2H_2F_2$), de polyol allylique et d'un monomère allylique ou acrylique ce monomère étant porteur d'une chaine fluorocarbonée. Ce copolymère, soluble dans les solvants organiques, est particulièrement recommandé pour la fabrication de peintures et vernis dont une de leurs principales propriétés est de résister aux taches et aux salissures.

Les polymères fluorés sont connus pour leurs bonnes propriétés mécaniques et leur excellente résistance aux produits chimiques et aux intempéries. Toutefois leur insolubilité dans les solvants classiques les rend inutilisables pour certaines applications dont par exemple celle de résine pour peintures et vernis où leurs propriétés sont recherchées pour la fabrication de revêtements de bonne résistance et d'entretien facile.

Afin de profiter des propriétés des polymères fluorés tout en évitant leurs inconvénients, des moyens ont été recherchés pour les rendre solubles dans les solvants organiques classiques. Pour ce faire il est connu de diminuer la cristallinité des polymères fluorés par copolymérisation de monomères éthyléniquement insaturés dont un au moins est fluoré. Du fait de sa faible cristallinité un tel copolymère possède généralement des propriétés mécaniques médiocres et en particulier une mauvaise dureté. Pour cette raison il est souhaitable pour certaines applications, en particulier pour leur emploi dans la fabrication des peintures et vernis, de leur conserver un degré suffisant de rigidité et de les rendre durcissables par incorporation dans leur structure de groupes fonctionnels.

De tels copolymères durcissables fluorés sont décrits dans le FR 2 488 260. Ils possèdent des atomes de fluor fixés en $\alpha$ des carbones de la chaine principale, ce qui est indispensable pour un produit possédant de bonnes propriétés de vieillissement. La présence d'atomes de fluor en $\alpha$ des carbones de la chaine principale apporte également un effet de non rétention de la pousière se traduisant par le fait que les peintures fluorées se salissent moins vite que les autres peintures. Toutefois la présence de l'atome de fluor en $\alpha$ des carbones de la chaine principale est nettement insuffisante pour assurer en particulier une protection au graffiti dans le cas des peintures claires où il subsiste toujours un spectre de l'inscription même après nettoyage. Pour tenter d'améliorer ce caractère antitache plusieurs solutions ont été envisagées, principalement dans les techniques décrites dans les documents ci-après.

Pour éviter que les revêtements ne se salissent très vite par les poussières il est proposé dans le EP 186186 un revêtement antisalissure caractérisé par l'association d'un polymère fluoré à sites réactifs avec des composés fluorocarbonés spécifiques du type :

$$CF_3\text{-}(CF_2)_n\text{-}CH_2\text{-}CH_2\text{-}OH$$

ou

$$OH\text{-}CH_2\text{-}CH_2\text{-}(CF_2)_m\text{-}CH_2\text{-}CH_2\text{-}OH$$

L'association de ces produits en faibles quantités n'a généralement pas d'effet antitache, en quantités importantes, ils limitent l'aptitude à la réticulation du film et entraînent ultérieurement la flottation des pigments dans les peintures et vernis et par là même nuisent à la régularité des teintes lors de l'application.

Dans le EP 311052 est décrit un revêtement antisalissure obtenu par association d'un polymère fluoré et d'un copolymère spécifique contenant du fluor sous forme d'une chaine polyfluorocarbonée et les restes d'un monomère hydrophyle. L'introduction de ce copolymère spécifique n'est pas favorable à un bon vieillissement du revêtement.

Dans l'état actuel de la technique la non permanence du caractère antitache à la suite de souillures et des nettoyages répétés n'est pas résolu. La présente invention permet d'apporter une solution à ce problème.

Outre cette propriété particulière le copolymère fluoré selon l'invention est facilement durcissable en présence éventuellement d'un agent durcissant. Ce copolymère en solution dans un solvant adapté à l'application peintures et vernis peut être utilisé pour former des revêtements possédant une bonne adhérence sur des substrats tels que métaux, céramiques, bois, matières plastiques, ou même d'anciens revêtements.

Le copolymère durcissable selon l'invention contenant les restes de copolymérisation d'un monomère fluoré et d'un monomère allylique est caractérisé en ce que :

a) les restes de monomère fluoré proviennent de l'association de tétrafluoroéthylène et d'au moins un autre monomère fluoré choisi parmi le chlorotrifluoroéthylène et le fluorure de vinylidène

b) le monomère allylique est un polyol allylique de formule :

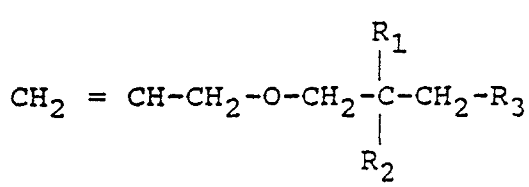

$R_1$ étant H ou $CH_2OH$
$R_2$ étant OH ou $CH_2OH$
$R_3$ étant $CH_3$ ou OH

sachant que $R_1$ et $R_3$ ne peuvent être simultanément H et $CH_3$ et en ce qu'il contient :

c) les restes d'un monomère allylique ou acrylique porteur d'une chaine fluorocarbonée de formule

$$CH_2 = \underset{\displaystyle R_4}{\underset{|}{C}} - X - C_2H_4 - (CF_2)_n - CF_3$$

avec

n étant une valeur de 3 à 12
$R_4$ étant H ou $CH_3$
X étant $CH_2$-O ou

$$\underset{\displaystyle O}{\underset{\|}{C}} - O$$

Ce copolymère peut éventuellement contenir les restes d'un éther vinylique non hydroxylé de formule $CH_2 = CH - O - R_5$ dans laquelle $R_5$ est un radical alkyl linéaire ou ramifié possédant de 2 à 13 atomes de carbone.

La composition du copolymère durcissable défini pour 100 moles de la totalité des monomères copolymérisés est généralement la suivante :

tétrafluoroéthylène : 14 à 45 moles
chlorotrifluoroéthylène, fluorure de vinylidène ou le mélange des deux : 25 à 81 moles.
polyol allylique : 4 à 15 moles
monomère allylique ou acrylique fluorocarboné : 1 à 7 moles.

La solubilité du copolymère dans les solvants usuels pour peintures et vernis est conditionnée par le choix de la composition en monomères fluorés $C_2F_4$, $C_2H_2F_2$, $C_2F_3Cl$. A titre préférentiel on retient les deux compositions en monomères ci-après.

La première, riche en fluorure de vinylidène est caractérisée par un rapport entre le nombre de moles de $C_2H_2F_2$ et la somme des moles de $C_2F_4$ et $C_2F_3Cl$ tel que :

$$1,5 < \frac{C_2H_2F_2}{C_2F_4 + C_2F_3Cl} < 4$$

La seconde, contenant moins de 20 moles de $C_2H_2F_2$ est caractérisée par un rapport entre le nombre de moles de $C_2F_4$ et de $C_2F_3Cl$ tel que :

$$0,7 < \frac{C_2F_4}{C_2F_3Cl} < 1,5$$

Parmi les polyols allyliques préférés peuvent être cités les 3 allyloxy 1,2 Propanediol et le triméthylolpropanemonoallyléther.

Parmi les monomères allyliques ou acryliques préférés porteurs d'une chaine fluorocarbonée peuvent être cités les composés de formule :

$$CH_2 = CH - CH_2 - O - C_2H_4 - C_6F_{13}$$

$$CH_2 = CH - CH_2 - O - C_2H_4 - C_8F_{17}$$

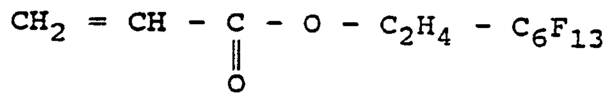

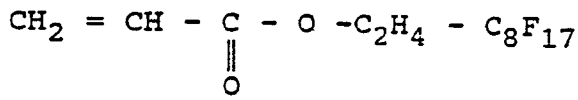

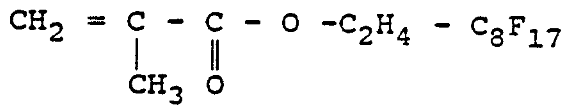

Lorsqu'un éther vinylique entre dans la composition du copolymère il peut être choisi de préférence parmi le butylvinyléther, l'isobutylvinyléther, le propylvinyléther, l'isopropylvinyléther.

Afin de pouvoir utiliser ces copolymères dans une composition liquide de revêtement telle que peinture ou vernis, il est recommandé que la viscosité inhérente du copolymère dissous dans la diméthylformamide à 25°C à une concentration de 1g/dl soit comprise entre les valeurs de 0,06 à 1 dl/g.

La présence de $C_2F_4$ est indispensable pour réussir à incorporer un polyol allylique dans la chaine du copolymère. Avec un taux inférieur aux 14 % molaire cités, la productivité et, en particulier, la cinétique de polymérisation chutent de façon conséquente. Avec un taux supérieur aux 45 % molaire cités, le copolymère obtenu présente des problèmes de solubilisation dans les solvants des peintures.

La présence d'un éther vinylique non hydroxylé lors de la copolymérisation est recommandée pour améliorer la solubilité du copolymère vis à vis des solvants habituels. Sans nuire aux propriétés du copolymère final il est possible d'introduire dans la composition du copolymère durcissable jusqu'à 33 moles d'éther vinylique non hydroxylé pour 100 moles de la totalité des monomères de base entrant nécessairement dans la formulation dudit copolymère.

Le copolymère selon l'invention est habituellement obtenu selon le procédé connu de polymérisation en solution. Le procédé consiste à copolynériser les monomères en milieu solvant en présence d'un initiateur organosoluble, à une température comprise entre environ 30 et 120°C et de préférence entre 40 et 80°C sous une pression d'environ 10 à 80 bars et de préférence entre 15 et 40 bars.

Selon l'invention, le copolymère réticulable est obtenu par copolymérisation de tétrafluoroéthylène, d'au moins un autre monomère fluoré choisi parmi le chlorotrifluoroéthylène et le fluorure de vinylidène, et tels que définis précédemment, de polyol allylique et d'un monomère allylique ou acrylique, ce monomère étant porteur d'une chaine fluorocarbonée. Pour 100 moles de monomères copolymérisés sont utilisées :

14 à 45 moles de tétrafluoroéthylène
30 à 81 moles de chlorotrifluoroéthylène, de fluorure de vinylidène ou de mélange des deux
4 à 15 moles de monomère allylique sous forme de polyol allylique
1 à 7 moles de monomère allylique ou acrylique porteur d'une chaine fluorocarbonée.

A ces 100 moles de monomères peut éventuellement être ajouté un éther vinylique non hydroxylé tel que déjà défini en proportion pouvant atteindre jusqu'à 33 moles.

Selon un mode de copolymérisation préféré, le solvant est chauffé à la température de réaction choisie dans un réacteur agité préalablement dégazé. Un mélange de $C_2F_4$ et de $C_2F_3Cl$ et/ou $C_2H_2F_2$ ainsi éventuellement qu'une fraction initiale des autres monomères et de l'éther vinylique non hydroxylé éventuel sont introduits dans le réacteur.

La quantité de mélange de monomères à introduire pour atteindre la pression de réaction choisie dépend des conditions de solubilité du $C_2F_4$, $C_2F_3Cl$ et/ou $C_2H_2F_2$ dans le solvant choisi. Le rapport pondéral mélange : $C_2F_4$, $C_2F_3Cl$ et/ou $C_2H_2F_2$ sur solvant est en général compris entre 0,1 et 1.

Lorsque la pression de réaction et la température de réaction sont atteintes, on introduit dans le réacteur l'initiateur de polymérisation. La formation de polymère se traduit par une baisse de pression que l'on compense par l'ajout de mélange $C_2F_4$, $C_2F_3Cl$ et/ou $C_2H_2F_2$.

On peut ajouter un mélange de $C_2F_4$, $C_2F_3Cl$ et/ou $C_2H_2F_2$ de composition molaire identique à celle introduite initialement.

On peut également tenir compte des réactivités propres de chaque monomère et ajuster la composition du mélange rajouté au cours de la polymérisation pour faire un copolymère homogène en composition.

Les autres monomères et le vinyléther non hydroxylé éventuel peuvent également être ajoutés en cours de polymérisation. Ils peuvent également être ajoutés en mélange ou séparément, en association ou non aux ajouts de $C_2F_4$, $C_2F_3cl$ et/ou $C_2H_2F_2$. Ces autres monomères et le vinyléther non hydroxylé éventuel sont ajoutés, de préférence, de

telle sorte que la composition du mélange de tous les monomères reste constante pendant toute la durée de la copolymérisation.

L'ajout du mélange de $C_2F_4$, $C_2F_3Cl$ et/ou $C_2H_2F_2$ pour maintenir la pression est poursuivi suffisamment longtemps pour atteindre un extrait sec de l'ordre de 10 à 60 %, de préférence de 15 à 40 %.

Les réactifs résiduaires volatils peuvent être éliminés par dégazage.

La solution extraite du réacteur de polymérisation peut être conservée telle quelle si le solvant de polymérisation convient pour l'application peintures et vernis. Dans le cas contraire il est éliminé par distillation et remplacé par un autre solvant plus adapté au type d'application choisie. La solution peut éventuellement subir un lavage à l'eau destiné à éliminer des résidus hydrosolubles formés lors de la polymérisation, responsables d'une mauvaise stabilité au stockage.

Les solvants choisis pour la réaction de copolymérisation doivent permettre de solubiliser le mélange des monomères tout en restant inertes vis à vis des autres composants réactionnels. Ils sont choisis de préférence parmi les acétates et les alcools. Parmi les acétates préférés, l'acétate de butyle, d'isobutyle et d'éthyle sont particulièrement retenus. Parmi les alcools préférés, sont cités le n-propanol et le tertiobutanol.

Les initiateurs de copolymérisation sont connus en eux-mêmes, les plus courants étant choisis parmi les initiateurs de polymérisation radicalaire comme les perdicarbonates, les perpivalates et les composés azo, tels que le percarbonate de diisopropyle ou de dicyclohexyle, le perpivalate de tertiobutyle ou de tertioamyle, l'azobisisobutyronitrile et l'azo-bis-2,2-diméthylvaléronitrile.

Les masses moléculaires en nombre (Mn) des copolymères réticulables obtenus sont, de préférence, compris entre 1000 et 20000 ; elles sont mesurées par la technique de chromatographie d'exclusion stérique (GPC) après dissolution dans la diméthylformamide, à température ambiante. Ces mesures GPC sont réalisées sur un dispositif à 3 colonnes WATERS microstyragel $10^2$ nm, $10^3$ nm, $10^4$ nm, calibré par des étalons polyéthylène glycol. La détection est assurée par un réfractomètre.

Tel quel, le copolymère en milieu solvant donne une solution transparente. A cette solution, peuvent être ajoutés les additifs souhaités tels que pigments, charges, solvants, diluants, catalyseurs, agents modificateurs de rhéologie, agents d'étalement, agents mouillants, antimousses, agents stabilisants contre la chaleur ou la lumière, promoteurs d'adhésion, corésines ou agents de durcissement par réticulation.

Parmi les pigments on peut citer le dioxyde de titane, les oxydes de fer, l'oxyde de chrome vert, le bleu de cobalt, le jaune de chrome, le noir de carbone ou des pigments inhibiteurs de corrosion tels que le phosphate de zinc, le triphosphate d'aluminium.

Parmi les solvants ou diluants on peut citer les esters, les cétones, les éthers de propylène glycol, les composés aromatiques.

Parmi les corésines on peut citer les résines acryliques, les polyesters, les polyéthers, les époxydes.

Parmi les agents de durcissement par réticulation on peut citer les mélamines-formol éventuellement éthérifiées, les isocyanates ou polyisocyanates libres ou bloqués, les acides ou polyacides organiques ou leurs anhydrides.

La température de réticulation de ces copolymères est généralement comprise entre -20 et +270°C et dépend essentiellement de la nature du durcisseur.

L'aptitude à la réticulation des copolymères fluorés fonctionnels est jugée au moyen d'un test de résistance à un solvant. Un coton imbibé de méthyléthylcétone (MEC) est frotté dans un mouvement de va et vient sur le revêtement jusqu'à apparition du support. Un nombre d'allers retours supérieur à 50 montre une bonne réticulation, un nombre d'allers retours supérieur à 100 montre une excellente réticulation.

Les vernis ou peintures à base de ces copolymères peuvent être appliqués par projection pneumatique ou électrostatique, au trempé, à la brosse, ou encore au rouleau.

Les exemples suivants illustrent l'invention sans toutefois la limiter.

Dans ces exemples, le pouvoir antitache peut être évalué de différentes façons.

Une première méthode consiste à mesurer les tensions superficielles critiques des revêtements obtenus par la méthode de ZISMAN dans laquelle la tension superficielle critique $\tau_c$ est déterminée en mesurant les angles de contact $\theta$ d'une série de liquides de tensions superficielles décroissantes $\tau_L$. En portant cos. $\theta$ en fonction de $\tau_L$, on obtient pour cos. $\theta = 1$ la plus grande valeur de $\tau_L$ correspondant au mouillage parfait du revêtement ($\theta = 0$). Cette valeur correspond aussi à la tension superficielle critique du revêtement $\tau_c$. plus $\tau_c$. est faible, plus le pouvoir antitache est élevé.

La série comprend les liquides suivants :

- eau bidistillée fraichement préparée (moins de 24heures)
- glycérol bidistillé
- diiodométhane
- alcool benzylique.

Les angles de contacts sont mesurés avec un goniomètre de type RAME-HART.

Une seconde méthode consiste à évaluer la résistance aux taches vis à vis d'agents tachants types.

Le substrat revêtu est taché sur une surface circulaire minimale de 4 $cm^2$ par les agents suivants :

cirage noir polish marque KIWI
feutre indélébile noir marque PENTEL
peinture graffiti rose fluorescent marque ALTONA.

Les taches sont nettoyées après une semaine d'imprégnation. Ce nettoyage est réalisé au moyen d'un coton imbibé de méthyléthylcétone. Le coton imbibé est changé aussi souvent que nécessaire pour pouvoir absorber la tache. Le nettoyage est considéré comme terminé lorsqu'après 5 allers retours d'un coton propre on ne distingue plus à l'oeil nu de traces de salissures sur le coton lui-même. Les spectres, ou traces de produit non éliminés sont évalués soit visuellement soit par une mesure au spectrocolorimètre d'écart colorimétrique par rapport à un standard non altéré.

Lorsque l'essai est réalisé visuellement le spectre est évalué de la manière suivante :

0 = pas de trace.
1 = empreinte non pigmentée visible à 25 cm.
2 = empreinte pigmentée non visible à plus de 30 cm.
3 = empreinte pigmentée non visible à plus de 2 m.
4 = empreinte pigmentée non visible à plus de 5 m.

Pour mesurer la permanence de l'effet antitache on tache les éprouvettes revêtues sur une surface circulaire de 4 $cm^2$.

L'éprouvette tachée est maintenue 3 minutes à température ambiante, étuvée pendant 3 minutes à 100°C, puis refroidie à température ambiante.

On nettoie ensuite au moyen d'un coton imbibé de méthyléthylcétone (MEC). Ce coton imbibé est changé aussi souvent que nécessaire pour absorber la tache.

Le nettoyage est considéré comme terminé lorsqu'après 5 allers retours d'un coton propre on ne distingue plus à l'oeil nu de traces de salissures sur le coton lui-même.

Les spectres sont évalués soit visuellement, selon l'échelle décrite précédemment, soit par une mesure d'écart colorimétrique par rapport à un standard non altéré.

Les éprouvettes sont à nouveau tachées en prenant soin de faire coïncider la nouvelle surface tachée avec la précédente. Les éprouvettes sont traitées comme précédemment et ainsi de suite jusqu'à l'apparition de différences significatives.

EXEMPLE COMPARATIF 1

Dans un autoclave de 3,3 l. muni d'une agitation efficace, on introduit après dégazage sous vide 2 litres de tertiobutanol, 30 g de 3 allyloxy 1,2 propanediol et 10 g du monomère fluoré de formule $C_8F_{17}C_2H_4$-O-$CH_2$-CH=$CH_2$. La température dans l'auto-clave est portée à 70°C. A cette température on ajoute 215 g de $C_2H_2F_2$, 84 g de $C_2F_4$ puis 5 g de perpivalate de tertiobutyle. La pression est de 20 bars.

La copolymérisation se manifeste par une baisse de pression que l'on compense par l'ajout d'un mélange de $C_2H_2F_2$,et $C_2F_4$ dans la proportion molaire de 65/35. Chaque fois que l'on introduit 46 g du mélange de monomère ainsi défini on introduit 5,5 g de 3 allyloxy-1,2 propanediol et 1,8 g du composé de formule $C_8F_{17}C_2H_4$-O-$CH_2$-CH = $CH_2$. On introduit 8 g de perpivalate de tertiobutyle après 3 h de polymérisation pour accélérer la cinétique de copolymérisation. Après 6h10 on a introduit au total 44 g de de 3 allyloxy-1,2 propanediol et 14 g du monomère de formule $C_8F_{17}C_2H_4$-O-$CH_2$CH = $CH_2$ et 414 g de mélange de monomères $C_2H_2F_2$/$C_2F_4$ : 65/35 molaire.

L'autoclave est refroidi, les monomères résiduaires sont dégazés et le contenu de l'autoclave est distillé sous vide. On récupère 445 g de copolymère que l'on dissout dans l'acétate de butyle. Après un lavage à l'eau la solution de copolymère est amenée à 64,4 % d'extrait sec.

Sur le copolymère on effectue un dosage chimique des fonctions hydroxy en milieu pyridine/anhydride phtalique. La solution d'anhydride phtalique est préparée en dissolvant dans un flacon en verre 140 g d'anhydride phtalique et 1 l de pyridine. 1 g de copolymère est introduit dans 5 ml de réactif puis est porté pendant 1 h à 95-100°C. Après refroidissement on dose par retour la disparition de l'anhydride phtalique. Le dosage donne un taux d'OH de 1,70meq/g (milliéquivalent par gramme).

Par analyse RMN du fluor 19 la composition molaire du copolymère est la suivante :

$$C_2H_2F_2/C_2F_4/CH_2=CH-CH_2-O-CH_2-CH(OH)-CH_2OH/C_8F_{17}C_2H_4-O-CH_2-CH=CH_2$$

60,2 /32,4/ 6,8 / 0,6

La viscosité inhérente du copolymère en solution dans la diméthylformamide à 25°C à une concentratration de 1 g/dl est de 0,19 dl/g.

**Essai 1**

On mélange 100 g de la solution de copolymère précédent avec 12,5 g d'isophorone diisocyanate et 2,3 g d'une solution de dilaurate dibutylétain (DBTL) à 10 % dans l'acétate de butyle. On ajuste la viscosité avec 12,5 g d'acétate de méthoxypropanol.

Le vernis obtenu est appliqué sur une plaquette d'aluminium chromaté dégraissée d'épaisseur 0,7 mm au moyen d'un raclet spirale de 100 µm.

L'éprouvette est mise à sécher pendant 48 heures à température ambiante pour donner un film d'épaisseur à sec de 30 µm. Le feuil obtenu subit, sans altération, 100 allers retours à la méthyléthylcétone. Il présente une dureté Persoz mesurée selon NFT 30-016 de 220s. et un brillant speculaire à 60° mesuré selon ASTM D- 523-85 de 60 %. La tension superficielle critique est de 34 mN/m..

Le résultat de résistance aux taches et à la permanence d'effet est donné dans les tableaux en annexe.

**Essai 2**

On prépare la base de broyage en dispersant pendant 30 minutes à 1500 t/min 120 g de dioxyde de titane avec 160 g de la solution de copolymère précédente et 40 g d'acétate de butyle.

A 160 g de cette base de broyage blanche on rajoute 20 g de la solution de copolymère ci-dessus, 21,5 g d'un trimère de l'hexaméthylène diisocyanate, 2,6 g d'une solution de DBTL à 10 % dans l'acétate de butyle. et 10 g d'acétate de butyle.

La peinture obtenue est appliquée sur une plaquette d'aluminium chromaté dégraissée d'épaisseur 0,7 mm au moyen d'un raclet spirale de 100 µm.

L'éprouvette est mise à sécher pendant 48 heures à température ambiante pour donner un film d'épaisseur à sec de 28 µm. Le feuil obtenu subit sans alteration 100 allers retours à la MEC. Il présente une dureté Persoz mesurée selon NFT 30016 de 215s et un brillant spéculaire à 60° mesuré selon ASTM D523-85 de 43 %.

La tension superficielle critique est de 37 mN/m. La résistance aux taches et la permanence d'effet sont présentées dans les tableaux en annexe.

**Essai 3**

On réalise une peinture identique à celle de l'essai 2. Pour le séchage on étuve la plaquette revêtue pendant 30 minutes à 80°C.

Le feuil de peinture d'épaisseur à sec de 28 µm subit sans alteration 100 allers retours à la méthyléthylcétone, présente une dureté Persoz mesurée selon NFT 30016 de 228s et un brillant spéculaire à 60° mesuré selon ASTM D 523-85 de 46 % La tension superficielle critique est de 37,7 mN/m La résistance aux taches et la permanence d'effet sont présentées dans les tableaux en annexe.

**EXEMPLE 2 COMPARATIF**

**Essai 4**

On réalise une peinture à partir d'un copolymère fluoré commercial dont les caractéristiques sont les suivantes :

copolymère de chlorotrifluoroéthylène et d'éthervinyliques, de masse en nombre 20000, d'indice d'OH 32 (mgKOH/g) et de température de transition 42±2°C, en solution à 60 % dans le xylène.

Pour cela on prépare tout d'abord une base pigmentaire en dispersant 118 g de dioxyde de titane pendant 30 minutes à 1500 t/min dans 196,5 g du copolymère fluoré commercial.

On déconcentre ensuite 78,6 g de cette base avec 21,7 g du copolymère fluoré commercial. On ajoute 7,95 g d'un

trimère de l'hexaméthylène diisocyanate et 0,2 g d'une solution de DBTL à 10 % dans l'acétate de butyle. On ajuste la viscosité avec 19,8 g d'acétate de butyle. La peinture obtenue est appliquée sur une plaquette d'aluminium chromaté dégraissée d'épaisseur 0,7 mm au moyen d'un raclet spirale de 100 µm.

L'éprouvette est mise à sécher pendant 48 heures à température ambiante pour donner un film d'épaisseur à sec de 26 µm. Le feuil obtenu subit sans alteration 100 allers retours à la MEC, présente une dureté Persoz mesurée selon NFT 30016 de 237s et un brillant spéculaire mesuré à 60° selon ASTM D-523.85 de 78 %.

La tension superficielle critique est de 39,5 mN/m. La résistance aux taches et la permanence d'effet comme présentées dans les tableaux en annexe sont limitées.

**Essai 5**

On réalise la même peinture que décrite pour l'essai 4 mais on sèche en étuve la plaquette revêtue pendant 30 minutes à 80°C.

Le feuil de peinture d'épaisseur à sec de 26 µm subit sans altération 100 allers retours à la MEC, présente une dureté Persoz mesurée selon NFT 30016 de 240s et un brillant spéculaire mesuré à 60° selon ASTM D 523.85 de 79 %. La tension superficielle critique est de 40 mN/m. La résistance aux taches et la permanence d'effet comme présentées dans les tableaux en annexe sont limitées.

**Essai 6**

On réalise des éprouvettes telles que décrites dans l'essai 4.

On prépare une composition fluorée en mélangeant 40 g d'un copolymère commercial acrylique polyfluoré hydroxylé (solution à 50 % dans l'acétate de butyle - viscosité 2600 mPa-s 1,3 % de teneur en hydroxyle), 6 g d'un trimère de l'hexaméthylène diisocyanate, 352,5 g d'acétate de methoxypropanol et 0,05 g d'une solution de DBTL à 10 % dans l'acétate de butyle.

La composition fluorée est appliquée sur la peinture de l'essai 4 au moyen d'un raclet spirale de 30 µm puis laissée sécher 48 heures à température ambiante pour donner un film d'épaisseur à sec de 4 ± 1µm.

La tension superficielle critique est de 21 mN/m.

La résistance aux taches et la permanence d'effet sont données dans les tableaux en annexe.

**Essai 7**

On réalise des éprouvettes comme dans l'essai 6 mais la solution de composition fluorée est séchée en étuve pendant 30 minutes à 80°C pour donner un film d'épaisseur à sec de 4 ± 1µm.

La tension superficielle critique est de 20,7 mN/m.La résistance aux taches et la permanence d'effet sont présentées dans les tableaux en annexe.

**EXEMPLE 3**

Dans un autoclave de 3,3 l muni d'une agitation efficace, on introduit après dégazage sous vide 2 litres de tertiobutanol, 30 g de 3 allyloxy-1,2 propanediol et 30 g du monomère fluoré de formule

$$C_6F_{13}C_2H_4-O-\overset{\overset{\large O}{\|}}{C}-CH=CH_2.$$

La température dans l'autoclave est portée à 70°C. A cette température on ajoute 215 g de $C_2H_2F_2$ et 84g de $C_2F_4$ puis 5 g de perpivalate de tertiobutyle. La pression est de 20 bars. La copolymérisation se traduit par une baisse de pression que l'on compense par l'ajout d'un mélange de $C_2H_2F_2$ et $C_2F_4$ dans la proportion molaire de 65/35.

Chaque fois que l'on introduit 46 g du mélange de monomère ainsi défini on introduit 5,5 g de 3 allyloxy-1,2 propanediol, et 5,5 g du composé de formule

$$C_6F_{13}C_2H_4-O-\overset{\overset{\large O}{\|}}{C}-CH=CH_2.$$

On introduit 8 g de perpivalate de tertiobutyle après 3 heures de polymérisation pour accélérer la cinétique de copolymérisation. Après 5 heures on a introduit au total 44 g de 3allyloxy-1,2 propanediol et 414 g du monomère de formule

$$C_6F_{13}C_2H_4 - O - \overset{\overset{\displaystyle O}{\|}}{C} - CH = CH_2$$

et 414 g de mélange $C_2H_2F_2/C_2F_4$: 65/35 molaire.

L'autoclave est refroidi, les monomères résiduaires sont dégazés et le contenu de l'autoclave est distillé sous vide. On récupère 485 g de copolymère que l'on dissout dans l'acétate de butyle. Après un lavage à l'eau la solution de polymère est amenée à 68,9 % d'extrait sec.

Sur le copolymère on effectue un dosage chimique des fonctions hydroxy, en milieu pyridine/anhydride phtalique comme précédemment décrit. Le dosage donne un taux d'OH de 1,5 meq/g.

Par analyse RMN du fluor 19 la composition molaire du copolymère est la suivante :

$$C_2H_2F_2/C_2F_4/CH_2 = CH-CH_2-O-CH_2-\underset{\underset{\displaystyle OH}{|}}{CH}-CH_2OH/C_6F_{13}C_2H_4-O-\underset{\underset{\displaystyle O}{\|}}{C}-CH=CH_2$$

58,5 /31,5/ 6,7 / 3,3

La viscosité inhérente du copolymère en solution dans la diméthylformamide à 25°C à une concentration de 1 g/dl est de 0,18 dl/g.

**Essai 8**

On mélange 200 g de la solution de copolymère précédente avec 23,9 g d'isophorone diisocyanate et 0,90 g d'une solution de DBTL à 10 % dans l'acétate de butyle. On ajuste la viscosité avec 27 g d'acétate de méthoxypropanol.

Le vernis obtenu est appliqué sur une plaquette d'aluminium chromaté dégraissée d'épaisseur 0,7 mm au moyen d'un raclet spirale de 100 µm.

L'éprouvette est séchée pendant 48 heures à température ambiante pour donner un film d'épaisseur à sec de 27 µm. Le feuil obtenu subit sans altération 100 allers retours à la MEC, présente une dureté Persoz mesurée selon NFT 30016 de 240s et un brillant spéculaire à 60° mesuré selon ASTM D 523.85 de 53 %. La tension superficielle critique est de 31 mN/m.

La résistance aux taches est donnée dans le tableau en annexe.

**Essai 9**

On mélange 200 g du copolymère en solution précédent avec 40 g d'une résine de mélamine formol éthérifiée en solution à 90 % dans l'isobutanol et 0,25 g d'acide p-toluène sulfonique. On ajuste la viscosité avec 40 g de diacétate de propylène glycol. Le vernis obtenu est appliqué sur une plaquette d'aluminium galvanisé dégraissée d'épaisseur 0,8 mm au moyen d'un raclet spirale de 100 µm.

L'éprouvette est séchée en étuve à 150°C pendant 30 minutes pour donner un film d'épaisseur à sec de 22 µm. Le film obtenu subit sans altération 100 allers retours à la MEC, présente un brillant spéculaire a 60° mesuré selon ASTM D 523.85 de 60 % et une dureté Persoz mesurée selon NFT 30016 de 225s: La tension superficielle critique est de 31 mN/m.

La résistance aux taches est donnée dans le tableau en annexe.

**Essais 10**

On prépare la base de broyage en dispersant pendant 30 minutes à 1500 t/min 126 g de dioxyde de titane avec 160 g de la solution de copolymère précédente, 28,8 g d'acétate de butyle et 18 g d'acétate de méthoxypropanol.

A 106,4 g de cette base de broyage blanche on ajoute 20 g de la solution de copolymère, 21 g d'un trimère de l'hexaméthylènediisocyanate, 0,7 g d'une solution de DBTL à 10 % dans l'acétate de butyle, 26,3 g d'acétate de butyle et 5,2 g d'acétate de méthoxypropanol.

La peinture obtenue est appliquée sur une plaquette d'aluminium chromaté dégraissée d'épaisseur 0,7 mm au moyen d'un raclet spirale de 100 µm.

L'éprouvette est séchée pendant 48 h à température ambiante pour donner un film d'épaisseur à sec de 26 µm. Le feuil obtenu subit sans altération 100 allers retours à la MEC, présente une dureté Persoz mesurée selon NFT 30016 de 205s et un brillant spéculaire à 60° mesuré selon ASTM D 523.85 de 58 %.

La tension superficielle critique est de 32,5 mN/m.

Le résultat de résistance aux taches et de la permanence d'effet est donné dans les tableaux en annexe.

**Essai 11**

On réalise la même peinture que décrite dans l'essai 10 mais le séchage s'effectue en étuve en 30 minutes à 80°C.

Le feuil de peinture d'épaisseur à sec de 26 µm subit sans altération 100 allers retours à la MEC, présente un brillant spéculaire à 60° mesuré selon ASTM D 523.85 de 69 % et une dureté Persoz mesurée selon NFT 30016 de 215s. La tension superficielle critique est de 32,5 mN/m. La résistance aux taches et la permanence d'effet sont présentées dans les tableaux en annexe.

EXEMPLE 4

Dans un autoclave de 3,3 l muni d'une agitation efficace, on introduit après dégazage sous vide 2 litres de tertiobutanol, 30 g de 3 allyloxy-1,2 propanediol et 30 g du monomère fluoré de formule $C_8F_{17}C_2H_4$-O-$CH_2$-CH = $CH_2$. La température dans l'auto-clave est portée à 70°C. A cette température on ajoute 215 g de $C_2H_2F_2$, 84 g de $C_2F_4$ puis 5 g de perpivalate de tertiobutyle. La pression est de 20 bars. La copolymérisation se traduit par une baisse de pression que l'on compense par l'ajout d'un mélange de $C_2H_2F_2$ et $C_2F_4$ dans la proportion molaire de 65/35. Chaque fois que l'on introduit 46 g du mélange de monomère ainsi défini on introduit 5,5 g de 3 allyloxy-1,2 propanediol, et 5,5 g du composé de formule $C_8F_{17}C_2H_4$-O-$CH_2$-CH = $CH_2$. On introduit 8 g de perpivalate de tertiobutyle après 3 h de polymérisation pour accélérer la cinétique de copolymérisation. Après 5h30 on a introduit au total 44 g de 3 allyloxy-1,2 propanediol et 44 g du monomère de formule $C_8F_{17}C_2H_4$-O-$CH_2$-CH=$CH_2$ ainsi que 414 g du mélange $C_2H_2F_2/C_2F_4$ : 65/35 molaire.

L'autoclave est refroidi, les monomères résiduaires sont dégazés et le contenu de l'autoclave est distillé sous vide. On récupère 456 g de copolymère que l'on dissout dans l'acétate de butyle. Après un lavage à l'eau, la solution de polymère est amenée à 52 % d'extrait sec.

Sur le copolymère on effectue un dosage chimique des fonctions hydroxy en milieu pyridine/anhydride phtalique, comme précédemment décrit.

Le dosage donne un taux d'OH de 1,70 meq/g. Par analyse RMN du fluor 19, la composition molaire du copolymère est la suivante :

$$C_2H_2F_2/C_2F_4/CH_2 = CH\text{-}CH_2\text{-}O\text{-}CH_2\text{-}\underset{\displaystyle OH}{\underset{|}{C}H}\text{-}CH_2OH/C_8F_{17}C_2H_4\text{-}O\text{-}CH_2\text{-}CH{=}CH_2$$

58 /31,2/ 8 / 2,8

La viscosité inhérente du copolymère dans la diméthylformamide à 25°C à une concentration de 1 g/dl est de 0,18 dl/g.

**Essai 12**

On mélange 100 g de la solution de copolymère précédent avec 17,4 g d'un trimère de l'hexamethylène diisocyanate et 2,2 g d'une solution de DBTL à 10 % dans l'acétate de butyle. On ajuste la viscosité avec 5,2 g d'acétate de méthoxypropanol.
Le vernis obtenu est appliqué sur une plaquette d'aluminium chromaté dégraissée d'épaisseur 0,7 mm au moyen d'un raclet spirale de 100 µm.
L'éprouvette est mise à sécher pendant 48 heures à température ambiante pour donner un film d'épaisseur à sec de 21 µm. Le feuil obtenu subit sans altération, 100 allers retours à la methyléthylcétone. Il présente une dureté Persoz mesurée selon NFT 30-016 de 212 s et un brillant spéculaire à 60° mesuré selon ASTM D 523.85 de 60 %. La tension superficielle critique est de 31,5 mN/m.

Le résultat de la résistance aux taches est donné dans les tableaux en annexe.

**Essai 13**

On prépare la base de broyage en dispersant pendant 30 minutes à 1500 t/min 97,2 g de dioxyde de titane avec 194,4 g de la solution de copolymère précédente et 20 g d'acétate de méthoxypropanol.
A 233,7 g de cette base de broyage blanche on ajoute 4,2 g de la solution de copolymère précédente, 26,1 g d'un trimère de l'hexamethylène diisocyanate, 0,8 g d'une solution à 10 % de DBTL dans l'acétate de butyle et 12 g d'acétate de butyle.

La peinture obtenue est appliquée sur une plaquette d'aluminium chromaté degraissé d'épaisseur 0,7 mm au moyen d'un raclet spirale de 100 µm.

L'éprouvette est séchée en étuve à 80°C pendant 30 minutes. Le feuil de peinture d'épaisseur à sec 21 µm subit sans altération 100 allers retours à la MEC, présente un brillant spéculaire à 60° mesuré selon ASTM D 523.85 de 55 % et une dureté Persoz mesurée selon NFT 30016 de 225 s. La tension superficielle critique est de 32,5 mN/m. Les résultats de la résistance aux taches et de la permanence d'effet sont donnés dans les tableaux en annexe.

EXEMPLE 5

Dans un autoclave de 3,3 l muni d'une agitation efficace, on introduit après dégazage sous vide 2 litres de tertiobutanol, 22 g de triméthylopropane monoallyéther et 30 g du monomère fluoré de formule

$$C_6F_{13}C_2H_4-O-\underset{\underset{O}{\|}}{C}-CH = CH_2.$$

La température dans l'autoclave est portée à 70°C. A cette température on ajoute 215 g de $C_2H_2F_2$, 84 g de $C_2F_4$ puis 5 g de perpivalate de tertiobutyle. La pression est de 20 bars. La copolymérisation se traduit par une baisse de pression que l'on compense par l'ajout d'un mélange de $C_2H_2F_2$ et $C_2F_4$ dans la proportion molaire de 65/35.

Chaque fois que l'on introduit 46 g du mélange de monomère ainsi défini on introduit 8 g de triméthylol propane monoallyléther, et 7,5 g du composé de formule

$$C_6F_{13}C_2H_4-O-\underset{\underset{O}{\|}}{C}-CH = CH_2.$$

On introduit 12 g de perpivalate de tertiobutyle après 3 h de polymérisation pour accélérer la cinétique de copolymérisation. Après 6 h on a introduit au total 40 g de triméthylol propane monoallyléther, 37,5 g du monomère de formule

$$C_6F_{13}C_2H_4-O-\underset{\underset{O}{\|}}{C}-CH = CH_2$$

ainsi que 368 g de mélange $C_2H_2F_2/C_2F_4$ : 65/35 molaire.

L'autoclave est refroidi, les monomères résiduaires sont dégazés et le contenu de l'autoclave est distillé sous vide. On récupère 371 g de copolymère que l'on dissout dans l'acétate de butyle. Après un lavage à l'eau la solution de polymère est amenée à 60 % d'extrait sec.

Sur le copolymère on effectue un dosage chimique des fonctions hydroxy en milieu pyridine/anhydride phtalique comme précédemment décrit. Le dosage donne un taux d'OH de 1,36 meq/g.

Par analyse RMN du fluor 19, la composition molaire du copolymère est la suivante :

$$C_2H_2F_2/C_2F_4/CH_2 = CH-CH_2-O-CH_2-\overset{\overset{CH_2OH}{|}}{\underset{\underset{CH_2OH}{|}}{C}}-CH_3/C_6F_{13}C_2H_4-O-\underset{\underset{O}{\|}}{C}-CH=CH_2$$

$$58,5\ /31,5/ \qquad 6,4 \qquad / \qquad 3,6$$

La viscosité inhérente d'une solution de copolymère dans la diméthylformamide à 25°C à une concentration de 1 g/dl est de 0,18 g/dl.

**Essai 14**

On mélange 120 g de la solution de copolymère précédente avec 20 g d'une résine de mélamine formol étherifiée à 90 % dans l'isobutanol, 10 g de xylène et 0,3 g d'acide paratoluènesulfonique. Le vernis obtenu est appliqué sur une plaquette d'aluminium chromaté dégraissée d'épaisseur 0,7 mm au moyen d'un raclet spirale de 100 µm.

L'éprouvette est mise à sécher en étuve à 145°C pendant 30 minutes pour donner un film d'épaisseur à sec de 22 µm. Le feuil subit sans altération 100 allers retours à la méthyléthylcétone. Il présente une dureté Persoz mesurée selon NFT 30-016 de 225 s et un brillant spéculaire à 60° mesuré selon ASTM D 523.85 de 65 %. La tension superficielle critique est de 31,5 mN/m.

Le résultat de la résistance aux taches est donné dans les tableaux en annexe.

**Essai 15**

On prépare la base de broyage en dispersant pendant 30 minutes à 1500 tours/min, 106,4 g de dioxyde de titane avec 177,4 g de la solution de copolymère précédente et 16 g d'acétate de méthoxypropanol.

A 149,9 g de cette base de broyage blanche on ajoute 11,3 g de la solution de copolymère précédente, 16 g d'un trimère de l'hexamethylènediisocyanate, 2,0 g d'une solution à 10 % de DBTL dans l'acétate de butyle et 6 g d'acétate de butyle.

La peinture obtenue est appliquée sur une plaquette d'aluminium chromaté dégraissée d'épaisseur 0,7 mm au moyen d'un raclet spirale de 100 µm.

L'éprouvette est laissée sécher à température ambiante pendant 48 heures. Le feuil de peinture d'épaisseur à sec 23 µm subit sans altération 100 allers retours à la MEC, présente un brillant spéculaire à 60° mesuré selon ASTM D 523.85 de 63 % et une dureté Persoz mesurée selon NFT 30016 de 220 s.

La tension superficielle critique est de 32,5 mN/m.

Les résultats de la résistance aux taches et de la permanence d'effet sont donnés dans les tableaux en annexe.

EXEMPLE 6

Dans un autoclave de 3,3 l muni d'une agitation efficace on introduit après dégazage sous vide 2 l de tertiobutanol, 50 g de 3 allyloxy-1,2 propanediol, 40 g du monomère fluoré de formule $C_8F_{17}C_2H_4$-O-$CH_2$-CH = $CH_2$ et 90 g de butylvinyléther. La température dans l'autoclave est portée à 70°C. A cette température on ajoute 280 g de $C_2F_3Cl$, 240 g de $C_2F_4$ et 10 g de perpivalate de tertiobutyle. La pression est de 15 bars. La copolymérisation se traduit par une baisse de pression que l'on compense par l'ajout d'un mélange $C_2F_3Cl/C_2F_4$ dans la proportion molaire de 50/50.

Chaque fois que l'on introduit 27 g de mélange de monomère ainsi défini, on introduit 4,5 g de 3 allyloxy-1,2 propanediol, 4 g de $C_8F_{17}C_2H_4$-O-$CH_2$-CH= $CH_2$ et 6,8 g de butylvinyléther.

Après 5 h on a introduit au total 58,5 g de 3 allyloxy 1,2 propanediol et 52 g de $C_3F_{17}C_2H_4$-O-$CH_2$-CH = $CH_2$ ainsi que 360 g du mélange $C_2F_3Cl/C_2F_4$ 50/50 molaire et 88 g de butylvinyléther.

L'autoclave est refroidi, les monomères résiduaires sont dégazés et le contenu de l'autoclave est distillé sous vide.

On récupère 700 g de copolymère que l'on dissout dans de l'acétate d'éthyle. Après un lavage à l'eau la solution de polymère est amenée à 65 % d'extrait sec.

Le dosage chimique des fonctions hydroxy tel que décrit précédemment donne un taux d'OH de 1,05 meq/g.

Par analyse RMN du fluor 19 la composition molaire du copolymère est la suivante :

$C_2F_4/C_2F_3Cl$/butylvinyléther/$C_8F_{17}C_2H_4$-O-$CH_2$-CH=$CH_2$/
31 / 31 / 29 / 3
allyloxypropanediol
6

La viscosité inhérente du copolymère dans la diméthylformamide à 25°C à une concentration de 1 g/dl est de 0,98 dl/g.

**Essai 16**

On mélange 100 g de la solution du copolymère précédente avec 8,0 g d'isophorone diisocyanate et 2,3 g d'une solution de DBTL à 10 % dans l'acétate de butyle. On ajuste la viscosité avec 15,2 g d'acétate de méthoxypropanol.

Le vernis obtenu est appliqué sur une plaquette d'aluminium chromaté dégraissée d'épaisseur 0,7 mm au moyen d'un raclet spirale de 100 µm.

L'éprouvette est séchée pendant 48 h à température ambiante pour donner un film d'épaisseur à sec de 26 µm. Le feuil obtenu subit sans altération 100 allers retours à la MEC, présente une dureté Persoz mesurée selon NFT 30016 de 230s et un brillant spéculaire à 60° mesuré selon ASTM D 523.85 de 68 %. La tension superficielle critique est de 31,5 mN/m.

Le résultat de la résistance aux taches et à la permanence de l'effet antitache est donné dans les tableaux en annexe.

**Essai 17**

On prépare la base de broyage en dispersant pendant 30 minutes à 1500 t/min 110 g de dioxyde de titane avec 160 g de solution de copolymère précédente et 30 g d'acétate de butyle.

A 150 g de cette base de broyage blanche on ajoute 20 g de solution de copolymère précédente, 13,4 g d'un trimère

de l'hexaméthylénediisocyanate, 0,5 g d'une solution à 10 % de DBTL dans l'acétate de butyle et 12 g d'acétate de butyle.

La peinture obtenue est appliquée sur une plaquette d'aluminium chromaté dégraissée d'épaisseur 0,7 mm au moyen d'un raclet spirale de 100 µm.

L'éprouvette est séchée pendant 48 h à température ambiante pour donner un film d'épaisseur à sec de 26 µm. Le feuil obtenu subit sans altération 100 allers retours à la MEC, présente un brillant spéculaire à 60° mesuré selon ASTM D 523.85 de 60 % et une dureté Persoz mesurée selon NFT 30016 de 240s.

La tension superficielle critique est de 32 mN/m..

Le résultat de la résistance aux taches et à la permanence d'effet est donné dans les tableaux en annexe.

**Essai 18**

On réalise la même peinture que celle décrite dans l'essai 12 mais on sèche en étuve la plaquette revêtue pendant 30 minutes à 80°C.

Le feuil de peinture d'épaisseur à sec de 26 µm subit sans altération 100 allers retours à la MEC, présente une dureté Persoz mesurée selon NFT 30016 de 245s et un brillant spéculaire à 60° mesuré selon ASTM D 523.85 de 65 %

La tension superficielle critique est de 32,5 mN/m..

Le résultat de la résistance aux taches et à la permanence d'effet est donné dans les tableaux annexés.

EXEMPLE 7

Dans un autoclave de 3,3 l muni d'une agitation efficace on introduit après dégazage sous vide 2 l de tertiobutanol 50 g triméthylolpropane monoallyléther, 40 g du monomère fluoré de formule

$$C_6F_{13}C_2H_4-O-\underset{\underset{O}{\|}}{C}-CH= CH_2$$

et 75 g de butylvinyléther.

La température dans l'autoclave est portée à 70°C. A cette température on ajoute 280 g de $C_2F_3Cl$, 240g de $C_2F_4$et 10 g de perpivalate de tertiobutyle. La pression est de 15 bars.

La copolymérisation se traduit par une baisse de pression que l'on compense par l'ajout d'un mélange $C_2F_3Cl/C_2F_4$ dans la proportion molaire de 50/50.

Chaque fois que l'on introduit 27 g de mélange de monomère ainsi défini, on introduit 6 g de triméthylolpropanemonoallyléther, 5,4 g de

$$C_6F_{13}C_2H_4-O-\underset{\underset{O}{\|}}{C}-CH= CH_2$$

et 5,6 g de butylvinyléther.

Après 5 h on a introduit au total 78 g de triméthylolpropanemonoallyléther, 70 g de

$$C_6F_{13}C_2H_4-O-\underset{\underset{O}{\|}}{C}-CH= CH_2,$$

360 g du mélange $C_2F_3Cl/C_2F_4$ : 50/50 molaire et 74 g de butylvinyléther.

L'autoclave est refroidi, les monomères résiduaires sont dégazés et le contenu de l'autoclave est distillé sous vide.

On récupère 770 g de copolymère que l'on dissout dans de l'acétate d'éthyle. Après un lavage à l'eau la solution de polymère est amenée à 65 % d'extrait sec.

Le dosage chimique des fonctions hydroxy tel que décrit précédemment donne un taux d'OH de 1,5 meq/g.

Par analyse RMN du fluor 19, la composition molaire du copolymère est la suivante :

$$C_2F_4/C_2F_3Cl/\text{butylvinyléther}/C_6F_{13}C_2H_4-O-\underset{\underset{O}{\|}}{C}-CH=CH_2/$$

32,2/ 32,5 / 21,3 / 3,7

triméthylolpronanemonoallyléther

9,3

La viscosité inhérente du copolymère dans la diméthylformamide à 25° à une concentration de 1 g/dl est de 0,98 dl/g.

**Essai 19**

On mélange 100 g de la solution de copolymère précédente avec 19,2 g d'un trimère de l'hexamethylenediisocyanate 2,3 g d'une solution de DBTL à 10 % dans l'acétate de butyle. On ajuste la viscosité avec 10 g d'acétate de méthoxypropanol.

Le vernis obtenu est appliqué sur une plaquette d'aluminium chromaté dégraissée d'épaisseur 0,7 mm au moyen d'un raclet spirale de 100 µm. L'éprouvette est séchée en étuve à 80°C pendant 30 minutes pour donner un film d'épaisseur à sec de 22 µm. Le film subit sans altération 100 allers retours à la MEC, présente une dureté Persoz mesurée selon NFT 30016 de 207 s et un brillant spéculaire à 60° mesuré selon ASTM D 523.85 de 62 %. La tension superficielle critique est de 30 mN/m. La résistance aux taches est donnée dans les tableaux en annexe.

**Essai 20**

On prépare la base de broyage en dispersant pendant 30 minutes à 1500 t/min 117,8 g de dioxyde de titane avec 181,4 g de la solution de copolymère précédente et 20 g d'acétate de méthoxypropanol.

A 59,6 g de cette base de broyage blanche, on ajoute 9,4 g de la solution de copolymère précédente, 19,2 g d'un trimère de l'hexaméthylènediisocyanate, 1,8 g d'une solution à 10 % de DBTL dans l'acétate de butyle et 5 g d'acétate de butyle.

La peinture obtenue est appliquée sur une plaquette d'aluminium chromaté dégraissée d'épaisseur 0,7 mm au moyen d'un raclet spirale de 100 µm.

L'éprouvette est séchée en étuve à 80°C pendant 30 minutes. Le feuil de peinture d'épaisseur à sec 22 µm subit sans altération 100 allers retours à la MEC, présente un brillant spéculaire à 60° mesuré selon ASTM D 523.85 de 59 % et une dureté Persoz mesurée selon NFT 30016 de 217 s. La tension superficielle critique est de 30,5 mN/m.

Les résultats de la résistance aux taches et de la permanence d'effet sont donnés dans les tableaux en annexe.

**PERMANENCE DE L'EFFET ANTITACHE POUR LES PEINTURES SECHEES A L'AIR**

(ECART COLORIMETRIQUE EVALUE AU SPECTROCOLORIMETRE ET EXPRIME EN UNITES MAC ADAM)

| N° Essai | tache au feutre noir | | | tache à la peinture rose fluorescent | | |
|---|---|---|---|---|---|---|
| | 1er cycle | 2ème cycle | 3ème cycle | 1er cycle | 2ème cycle | 3ème cycle |
| Essai 2 comparatif | 1,07 | 3,47 | 4,10 | 3,9 | 8,86 | 14,50 |
| Essai 4 comparatif | 1,32 | 5,45 | 10,33 | 1,46 | 1,39 | 3,88 |
| Essai 6 comparatif | 0,69 | 1,58 | 8,09 | 1,30 | 1,16 | 1,46 |
| Essai 10 | 0,54 | 0,98 | 3,14 | 1,35 | 1,85 | 1,72 |
| Essai 15 | 0,42 | 0,79 | 1,67 | 0,85 | 0,98 | 1,07 |
| Essai 17 | 0,59 | 1,05 | 3,23 | 1,25 | 1,57 | 1,81 |

**PERMANENCE DE L'EFFET ANTITACHE POUR LES PEINTURES SECHEES EN ETUVE**

(ECART COLORIMETRIQUE EVALUE AU SPECTROCOLORIMETRE ET EXPRIME EN UNITES MAC ADAM)

| N° Essai | tache au feutre noir | | | tache à la peinture rose fluorescent | | |
|---|---|---|---|---|---|---|
| | 1 cycle | 2e cycle | 3e cycle | 1 cycle | 2e cycle | 3e cycle |
| Essai 3 comparatif | 0,40 | 1,63 | 2,06 | 0,31 | 0,84 | 8,17 |
| Essai 5 comparatif | 1,08 | 2,00 | 3,46 | 0,41 | 0,59 | 2,38 |
| Essai 7 comparatif | 0,45 | 1,20 | 1,87 | 0,23 | 0,17 | 1,54 |
| Essai 11 | 0,03 | 0,01 | 0,10 | 0,17 | 0,36 | 1,94 |
| Essai 13 | 0,14 | 0,15 | 0,19 | 0,12 | 0,41 | 1,65 |
| Essai 18 | 0,12 | 0,15 | 0,07 | 0,13 | 0,40 | 1,70 |
| Essai 20 | 0,08 | 0,11 | 0,12 | 0,13 | 0,27 | 0,78 |

**RESISTANCE AUX TACHES POUR DES PEINTURES SECHEES A L'AIR**

(ECART COLORIMETRIQUE EVALUE AU SPECTROCOLORIMETRE ET EXPRIME EN UNITES MAC ADAM)

| N° Essai | cirage noir après 1 semaine | feutre noir après 1 semaine | peinture aérosol rose fluorescent après 1 semaine |
|---|---|---|---|
| Essai 2 comparatif | 7,44 | 1,58 | 3,78 |
| Essai 4 comparatif | 10,96 | 1,77 | 4,31 |
| Essai 6 comparatif | 9,50 | 0,87 | 1,04 |
| Essai 10 | 4,02 | 0,75 | 0,75 |
| Essai 15 | 3,56 | 0,39 | 0,52 |
| Essai 17 | 4,67 | 0,63 | 0,81 |

**RESISTANCE AUX TACHES POUR DES PEINTURES SECHEES AU FOUR**

(ECART COLORIMETRIQUE EVALUE AU SPECTROCOLORIMETRE ET EXPRIME EN UNITES MAC ADAM)

| N° Essai | cirage noir après 1 semaine | feutre noir après 1 semaine | peinture aérosol rose fluorescent après 1 semaine |
|---|---|---|---|
| Essai 3 comparatif | 6,53 | 2,44 | 3,44 |
| Essai 5 comparatif | 5,47 | 2,88 | 0,88 |
| Essai 7 comparatif | 5,33 | 1,51 | 0,33 |
| Essai 11 | 4,14 | 1,45 | 0,67 |
| Essai 13 | 2,17 | 0,48 | 0,31 |
| Essai 18 | 4,20 | 1,35 | 0,70 |
| Essai 20 | 4,07 | 1,46 | 0,73 |

**RESISTANCE AUX TACHES POUR DES VERNIS**

(ECART COLORIMETRIQUE EVALUE VISUELLEMENT)

| N° Essai | cirage noir après 1 semaine | feutre noir après 1 semaine | peinture aérosol rose fluo après 1 semaine |
|---|---|---|---|
| Essai 1 comparatif | 3 | 3 | 4 |
| Essai 8 | 2 | 1 | 2 |
| Essai 9 | 1 | 0 | 1 |
| Essai 12 | 2 | 0 | 1 |
| Essai 14 | 1 | 0 | 1 |
| Essai 16 | 2 | 1 | 1 |
| Essai 19 | 1 | 0 | 1 |

## Revendications

1. Copolymère fluoré durcissable contenant les restes de copolymérisation d'un monomère fluoré et d'un monomère allylique caractérisé en ce que

   a) les restes de monomère fluoré proviennent de l'association de tétrafluoroéthylène et d'au moins un autre monomère fluoré choisi parmi le chlorotrifluoroéthylène et le fluorure de vinylidène
   b) le monomère allylique est un polyol allylique de formule

   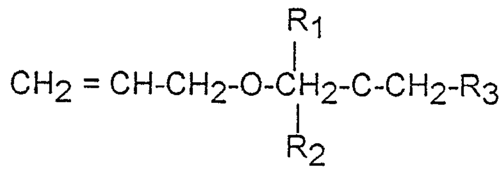

   $R_1$ étant H ou $CH_2OH$
   $R_2$ étant OH ou $CH_2OH$
   $R_3$ étant $CH_3$ ou OH

   sachant que $R_1$ et $R_3$ ne peuvent être simultanément H et $CH_3$ et en ce qu'il contient :
   c) les restes d'un monomère allylique ou acrylique porteur d'une chaîne fluorocarbonée de formule

   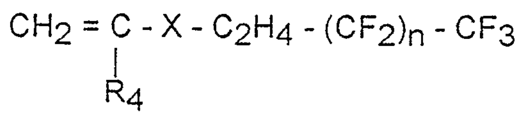

   avec

   n étant une valeur de 3 à 12
   R $_4$ étant H ou $CH_3$
   X étant $CH_2$-O ou

   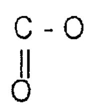

   et en ce que pour 100 moles de la totalité des monomères copolymérisés, il contient 14 à 45 moles de tétrafluoroéthylène.

2. Copolymère selon la revendication 1 caractérisé en ce que pour 100 moles de la totalité des monomères copolymérisés sa composition est

   14 à 45 moles de tétrafluoroéthylène
   25 à 81 moles de chlorotrifluoroéthylène, de fluorure de vinylidène ou le mélange des deux
   4 à 15 moles de polyol allylique
   1 à 7 moles de monomère allylique ou acrylique fluorocarboné.

3. Copolymère selon l'une des revendications 1 ou 2 caractérisé en ce qu'il contient les restes d'un éther vinylique non hydroxylé de formule $CH_2 = CH - O - R_5$ dans laquelle $R_5$ est un radical alkyl linéaire ou ramifié possédant 2 à 13 atomes de carbone.

4. Copolymère selon l'une des revendications 1 à 3 caractérisé en ce que dans sa composition sont introduites jusqu'à 33 moles d'éther vinylique non hydroxylé pour 100 moles de la totalité des monomères entrant nécessairement dans sa formulation.

5. Copolymère selon l'une des revendications 1 à 4 caractérisé en ce que le rapport entre le nombre de moles de

fluorure de vinylidène et la somme des moles de tétrafluoroéthylène et de chlorotrifluoroéthylène est tel que :

$$1,5 < \frac{C_2H_2F_2}{C_2F_4 + C_2F_3Cl} < 4$$

**6.** Copolymère selon l'une des revendications 1 à 4 caractérisé en ce qu'il contient moins de 20 moles de fluorure de vinylidène et en ce que, dans sa composition le rapport entre le nombre de moles de $C_2F_4$ et de $C_2F_3Cl$ est tel que

$$0,7 < \frac{C_2F_4}{C_2F_3Cl} < 1,5$$

**7.** Copolymère selon l'une des revendications 1 à 6 caractérisé en ce que sa viscosité inhérente, en solution dans la diméthylformamide à 25°C à une concentration de 1 g/dl, est comprise entre les valeurs de 0,06 à 1 dl/g.

**8.** Copolymère selon l'une des revendications 1 à 7 caractérisé en ce qu'il se présente en solution dans un solvant organique.

**9.** Copolymère selon la revendication 8 caractérisé en ce que le solvant est un alcool ou un acétate.

**10.** Procédé de fabrication de copolymère durcissable à base de monomère fluoré et de monomère allylique caractérisé en ce qu'on copolymérise

- du tétrafluoroéthylène,
- du chlorotrifluoroéthylène, du fluorure de vinylidène ou le mélange des deux,
- du polyol allylique de formule

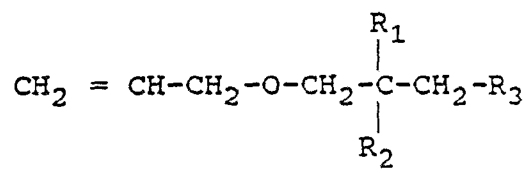

$R_1$ étant H ou $CH_2OH$
$R_2$ étant OH ou $CH_2OH$
$R_3$ étant $CH_3$ ou OH

sachant que $R_1$ et $R_3$ ne peuvent être simultanément H et $CH_3$

- du monomère allylique ou acrylique porteur d'une chaine fluorocarbonée de formule :

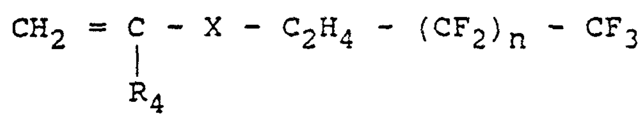

avec n étant une valeur de 3 à 12
$R_4$ étant H ou $CH_3$
X étant $CH_2$-O ou

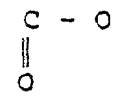

**11.** Procédé selon la revendication 10 caractérisé en ce que pour 100 moles de monomères polymérisés sont utilisés

14 à 45 moles de tétrafluoroéthylène
25 à 81 moles de chlorotrifluoroéthylène, de fluorure de vinylidène ou de mélange des deux
4 à 15 moles de monomère allylique sous forme de polyol allylique
1 à 7 moles de monomère allylique ou acrylique porteur d'une chaine fluorocarbonée.

**12.** Procédé selon l'une des revendications 10 ou 11 caractérisé en ce qu'on associe aux monomères entrant nécessairement dans la réaction de copolymérisation un éther vinylique tel que défini dans la revendication 3.

**13.** Procédé selon la revendication 12 caractérisé en ce que pour 100 moles de monomères polymérisés sont ajoutés jusqu'à 33 moles d'éther vinylique non hydroxylé.

**14.** Procédé selon l'une des revendications 10 à 13 caractérisé en ce que la copolymérisation s'effectue en solution dans un solvant organique.

**15.** Procédé selon la revendication 14 caractérisé en ce que le solvant est un alcool ou un acétate.

**16.** Procédé selon l'une des revendications 10 à 15 caractérisé en ce que la température de copolymérisation est comprise entre 30 et 120°C.

**17.** Procédé selon l'une des revendications 10 à 16 caractérisé en ce que la pression de copolymérisation est comprise entre 10 et 80 bars.

**18.** Peinture ou vernis résistant aux taches et aux salissures constitué de copolymère fluoré durcissable selon l'une des revendications 1 à 7 en solution dans un solvant.

**Patentansprüche**

**1.** Härtbares, fluoriertes Copolymer, enthaltend Reste aus der Copolymerisation eines fluorierten Monomers und eines Allylmonomers, dadurch gekennzeichnet, daß

a) die Reste des fluorierten Monomers aus der Verbindung von Tetrafluorethylen mit wenigstens einem weiteren fluorierten Monomer, ausgewählt aus Chlortrifluorethylen und Vinylidenfluorid stammen,
b) das Allylmonomer ein Allylpolyol der Formel

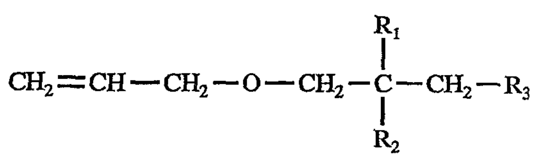

ist, wobei

$R_1$ H oder $CH_2OH$,

$R_2$ OH oder $CH_2OH$,

$R_3$ $CH_3$ oder OH ist,

wobei $R_1$ und $R_3$nicht gleichzeitig H oder $CH_3$ sind und das Copolymer:

c) Reste eines Allyl- oder Acrylmonomers mit einer Fluorkohlenwasserstoffkette der Formel

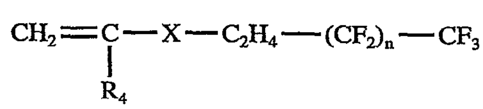

enthält, in der

n einen Wert von 3 bis 12 besitzt,
$R_4$ H oder $CH_3$ ist,
X $CH_2$-O oder

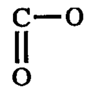

ist und das Copolymer 14 bis 45 mol Tetrafluorethylen pro 100 mol der Gesamtmenge an copolymerisierten Monomeren enthält.

2. Copolymer nach Anspruch 1, dadurch gekennzeichnet, daß es pro 100 mol der Gesamtmenge an copolymerisierten Monomeren folgende Zusammensetzung aufweist:

   14 bis 45 mol Tetrafluorethylen,
   25 bis 81 mol Chlortrifluorethylen, Vinylidenfluorid oder deren Mischung,
   4 bis 15 mol Allylpolyol,
   1 bis 7 mol Allyl- oder Acrylmonomer mit Fluorkohlenwasserstoffkette.

3. Copolymer nach Anspruch 1 oder 2, dadurch gekennzeichnet, daß es Reste eines nicht hydroxylierten Vinylethers der Formel

$$CH_2{=}CH{-}O{-}R_5$$

   enthält, in der $R_5$ ein geradkettiger oder verzweigter Alkylrest mit 2 bis 13 Kohlenstoffatomen ist.

4. Copolymer nach einem der Ansprüche 1 bis 3, dadurch gekennzeichnet, daß der Zusammensetzung bis zu 33 mol an nicht hydroxyliertem Vinylether pro 100 mol der Gesamtmenge an notwendigerweise in den Ansatz eingehenden Monomeren zugegeben werden.

5. Copolymer nach einem der Ansprüche 1 bis 4, dadurch gekennzeichnet, daß das Verhältnis zwischen der Molzahl an Vinylidenfluorid und der Summe der Molzahl an Tetrafluorethylen und Chlortrifluorethylen folgender Beziehung entspricht:

$$1{,}5 < \frac{C_2H_2F_2}{C_2F_4 + C_2F_3Cl} < 4$$

6. Copolymer nach einem der Ansprüche 1 bis 4, dadurch gekennzeichnet, daß es wenigstens 20 mol Vinylidenfluorid enthält, und das Verhältnis zwischen der Mohlzahl an $C_2F_4$ und $C_2F_3Cl$ in der Zusammensetzung folgender Beziehung entspricht:

$$0{,}7 < \frac{C_2F_4}{C_2F_3Cl} < 1{,}5$$

7. Copolymer nach einem der Ansprüche 1 bis 6, dadurch gekennzeichnet, daß seine innere Viskosität in Dimethylformamidlösung bei 25 °C und einer Konzentration von 1 g/dl zwischen 0,06 und 1 dl/g liegt.

8. Copolymer nach einem der Ansprüche 1 bis 7, dadurch gekennzeichnet, daß es als Lösung in einem organischen Lösemittel vorliegt.

9. Copolymer nach Anspruch 8, dadurch gekennzeichnet, daß das Lösungsmittel ein Alkohol oder ein Acetat ist.

10. Verfahren zur Herstellung eines härtbaren Copolymers auf Basis eines fluorierten Monomers und eines Allylmonomers, dadurch gekennzeichnet, daß man

   - Tetrafluorethylen,

   - Chlortrifluorethylen, Vinylidenfluorid oder deren Mischung,

- ein Allylpolyol der Formel

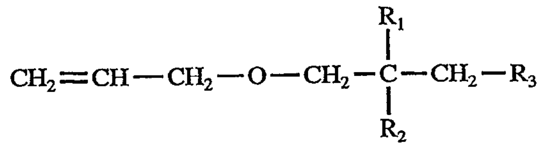

in der

$R_1$ H oder $CH_2OH$,
$R_2$ OH oder $CH_2OH$,
$R_3$ $CH_3$ oder OH ist,
wobei $R_1$ und $R_3$nicht gleichzeitig H oder $CH_3$ sind,

- und ein Allyl- oder Acrylmonomer mit einer Fluorkohlenwasserstoffkette der Formel

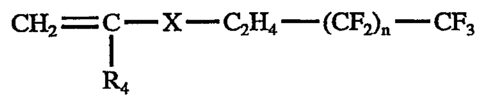

in der

n einen Wert von 3 bis 12 besitzt,
$R_4$ H oder $CH_3$ ist,
X $CH_2$-O oder

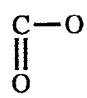

ist,

miteinander copolymerisiert.

**11.** Verfahren nach Anspruch 10, dadurch gekennzeichnet, daß pro 100 mol an polymerisierten Monomeren

14 bis 45 mol Tetrafluorethylen,
25 bis 81 mol Chlortrifluorethylen, Vinylidenfluorid oder deren Mischung,
4 bis 15 mol Allylmonomer als Allylpolyol,
1 bis 7 mol Allyl- oder Acrylmonomer mit einer Fluorkohlenwasserstoffkette

eingesetzt werden.

**12.** Verfahren nach Anspruch 10 oder 11, dadurch gekennzeichnet, daß man den notwendigerweise in die Copolymerisationsreaktion eingehenden Monomeren einen Vinylether nach Anspruch 3 zugibt.

**13.** Verfahren nach Anspruch 12, dadurch gekennzeichnet, daß pro 100 mol an polymerisierten Monomeren bis zu 33 mol an nicht hydroxyliertem Vinylether zugegeben werden.

**14.** Verfahren nach einem der Ansprüche 10 bis 13, dadurch gekennzeichnet, daß die Copolymerisation in Lösung in einem organischen Lösemittel abläuft.

**15.** Verfahren nach Anspruch 14, dadurch gekennzeichnet, daß das Lösungsmittel ein Alkohol oder ein Acetat ist.

**16.** Verfahren nach einem der Ansprüche 10 bis 15, dadurch gekennzeichnet, daß die Temperatur der Copolymerisation zwischen 30 und 120 °C liegt.

**17.** Verfahren nach einem der Ansprüche 10 bis 16, dadurch gekennzeichnet, daß der Druck der Copolymerisation zwischen 10 und 80 bar liegt.

**18.** Flecken- und schmutzunempfindliche(r) Farbe oder Lack, bestehend aus einem härtbaren fluorierten Copolymer nach einem der Ansprüche 1 bis 7, das in einem Lösungsmittel gelöst vorliegt.

**Claims**

**1.** Curable fluorocopolymer containing the copolymerization residues of a fluoromonomer and of an allyl monomer, characterized in that

a) the fluoromonomer residues originate from the combination of tetrafluoroethylene and of at least one other fluoromonomer chosen from chlorotrifluoroethylene and vinylidene fluoride
b) the allyl monomer is an allyl polyol of formula

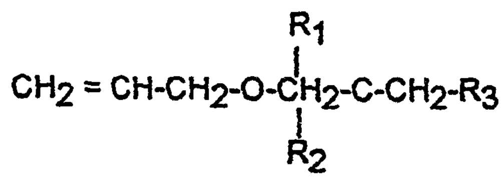

$R_1$ being H or $CH_2OH$

$R_2$ being OH or $CH_2OH$

$R_3$ being $CH_3$ or OH

it being known that $R_1$ and $R_3$ cannot simultaneously be H and $CH_3$ and in that it contains:
c) the residues of an allyl or acrylic monomer bearing a fluorocarbon chain of formula

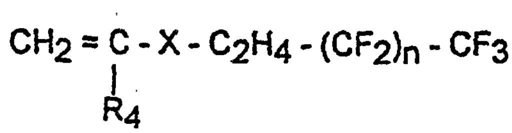

with

n being a value from 3 to 12

$R_4$ being H or $CH_3$

X being $CH_2$-O or

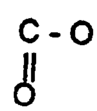

and in that it contains 14 to 45 moles of tetrafluoroethylene per 100 moles of the totality of the copolymerized monomers.

**2.** Copolymer according to Claim 1, characterized in that its composition, per 100 moles of the totality of the copolymerized monomers, is

14 to 45 moles of tetrafluoroethylene

25 to 81 moles of chlorotrifluoroethylene, of vinylidene fluoride or a mixture of the two
4 to 15 moles of allyl polyol
1 to 7 moles of allyl or acrylic fluorocarbon monomer.

**3.** Copolymer according to either of Claims 1 and 2, characterized in that it contains the residues of a nonhydroxylated vinyl ether of formula $CH_2=CH-O-R_5$ in which $R_5$ is a linear or branched alkyl radical containing 2 to 13 carbon atoms.

**4.** Copolymer according to one of Claims 1 to 3, characterized in that into its composition are introduced up to 33 moles of nonhydroxylated vinyl ether per 100 moles of the totality of the monomers necessarily forming part of its formulation.

**5.** Copolymer according to one of Claims 1 to 4, characterized in that the ratio of the number of moles of vinylidene fluoride to the sum of the moles of tetrafluoroethylene and chlorotrifluoroethylene is such that:

$$1.5 < \frac{C_2H_2F_2}{C_2F_4 + C_2F_3Cl} < 4$$

**6.** Copolymer according to one of Claims 1 to 4, characterized in that it contains less than 20 moles of vinylidene fluoride and in that the ratio of the number of moles of $C_2F_4$ to those of $C_2F_3Cl$ is such that

$$0.7 < \frac{C_2F_4}{C_2F_3Cl} < 1.5$$

**7.** Copolymer according to one of Claims 1 to 6, characterized in that its inherent viscosity in solution in dimethylformamide at 25°C at a concentration of 1 g/dl is between the values of 0.06 and 1 dl/g.

**8.** Copolymer according to one of Claims 1 to 7, characterized in that it is in solution in an organic solvent.

**9.** Copolymer according to Claim 8, characterized in that the solvent is an alcohol or an acetate.

**10.** Process for the manufacture of curable copolymer based on fluoromonomer and on allyl monomer, characterized in that the following are copolymerized:

- tetrafluoroethylene,
- chlorotrifluoroethylene, vinylidene fluoride or a mixture of the two,
- allyl polyol of formula

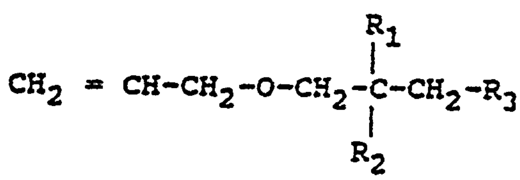

$R_1$ being H or $CH_2OH$
$R_2$ being OH or $CH_2OH$
$R_3$ being $CH_3$ or OH

it being known that $R_1$ and $R_3$ cannot simultaneously be H and $CH_3$

- allyl or acrylic monomer bearing a fluorocarbon chain of formula:

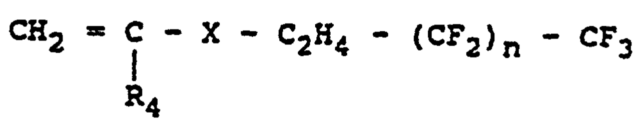

with

n being a value from 3 to 12
$R_4$ being H or $CH_3$
X being $CH_2$-O or

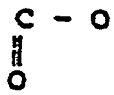

**11.** Process according to Claim 10, characterized in that the following are employed per 100 moles of polymerized monomers:

14 to 45 moles of tetrafluoroethylene
25 to 81 moles of chlorotrifluoroethylene, of vinylidene fluoride or of a mixture of the two
4 to 15 moles of allyl monomer in the form of allyl polyol
1 to 7 moles of allyl or acrylic monomer bearing a fluorocarbon chain.

**12.** Process according to either of Claims 10 and 11, characterized in that a vinyl ether as defined in Claim 3 is used in combination with the monomers necessarily entering the copolymerization reaction.

**13.** Process according to Claim 12, characterized in that up to 33 moles of nonhydroxylated vinyl ether are added per 100 moles of polymerized monomers.

**14.** Process according to one of Claims 10 to 13, characterized in that the copolymerization is performed in solution in an organic solvent.

**15.** Process according to Claim 14, characterized in that the solvent is an alcohol or an acetate.

**16.** Process according to one of Claims 10 to 15, characterized in that the copolymerization temperature is between 30 and 120°C.

**17.** Process according to one of Claims 10 to 16, characterized in that the copolymerization pressure is between 10 and 80 bars.

**18.** Stain- and soiling-resistant paint or varnish consisting of curable fluorocopolymer according to one of Claims 1 to 7 in solution in a solvent.